# EUROPÄISCHE PATENTSCHRIFT

(11) **EP 4 459 137 B1**
(45) Veröffentlichungstag und Bekanntmachung des Hinweises auf die Patenterteilung: **10.09.2025**
(21) Anmeldenummer: 24173704.8
(22) Anmeldetag: 02.05.2024
(51) Int. Cl.: F16B 13/00

(54) **DÄMMSTOFFANKER**
INSULATION MATERIAL ANCHOR
ANCRAGE POUR MATÉRIAU ISOLANT

(30) Priorität: 04.05.2023 DE 102023111531
(43) Veröffentlichungstag der Anmeldung: 06.11.2024
(73) Patentinhaber: fischerwerke GmbH & Co. KG, 72178 Waldachtal (DE)
(72) Erfinder: Duffner, Philipp, 72181 Starzach-Bierlingen (DE)
(74) Vertreter: Suchy, Ulrich Johannes

(56) Entgegenhaltungen:
- DE-U1- 202019 001 906
- DE-U1- 29 502 052

## Beschreibung

Die Erfindung betrifft einen Dämmstoffanker mit den Merkmalen des Oberbegriffs des Anspruchs 1. Der Dämmstoffanker ist zum Einschrauben in einen Dämmstoff wie beispielsweise eine geschäumte Dämmstoffplatte und zu einem Befestigen eines Anbauteils wie beispielsweise eines Briefkastens oder einer Außenleuchte mittels beispielsweise einer Schraube vorgesehen, die in den Dämmstoffanker eingeschraubt wird.

Das Gebrauchsmuster DE 20 2019 001 906 U1 offenbart einen Dämmstoffanker mit einem Hohlschaft, mit einem Dämmstoffgewinde außen an dem Hohlschaft, mit einer Bohrspitze an einem vorderen Ende des Hohlschafts und mit einem Schraubenkopf an einem hinteren Ende des Hohlschafts. Der Hohlschaft weist ein Sackloch zum Einschrauben einer Schraube auf, das am hinteren Ende des Dämmstoffankers offen ist. Die Bohrspitze ist kegelförmig und weist zwei gegenüberliegende Bohrmehlnuten auf, die in einer Längsrichtung des Dämmstoffankers verlaufende Umfangsschneiden bilden.

Aufgabe der Erfindung ist, einen Dämmstoffanker mit einem verbesserten Einziehverhalten bei einem Einschrauben in insbesondere ein Wärmedämmverbundsystem vorzuschlagen, das eine im Vergleich mit dem weichen Dämmstoff harte Putzschicht aufweist.

Diese Aufgabe wird erfindungsgemäß durch einen Dämmstoffanker mit den Merkmalen des Anspruchs 1 gelöst. Der erfindungsgemäße Dämmstoffanker weist einen Hohlschaft und eine Bohrspitze auf. Die Bohrspitze ist an einem Ende des Hohlschaft angeordnet. Zudem weist der Hohlschaft außen ein den Hohlschaft auf zumindest einem Teil seiner Länge wendelförmig umschließendes Dämmstoffgewinde auf. Ein Dämmstoffgewinde ist ein großflächiges Gewinde mit einer im Verhältnis zu seinem Außendurchmesser oder Kerndurchmesser in radialer Richtung hohen Gewindeflanke, um dem Dämmstoffgewinde in einem Baustoff mit geringer mechanischer Festigkeit einen guten Halt in axialer Richtung des Dämmstoffgewindes zu geben. Insbesondere weist das Dämmstoffgewinde einen Gewindedurchmesser von 20 mm bis 50 mm auf. Insbesondere beträgt das Verhältnis von Gewindedurchmesser des Dämmstoffgewindes zum Durchmesser seines Kerns mindestens 1,5. Das der Bohrspitze zugewandte Ende des Hohlschafts wird nachfolgend als "vorderes Ende des Hohlschafts" bezeichnet werden. Das Ende des Dämmstoffankers, an dem sich die Bohrspitze befindet beziehungsweise ein dem Hohlschaft fernes vorderes Ende der Bohrspitze, wird nachfolgend als "vorderes Ende des Dämmstoffankers" bezeichnet werden.

Der Hohlschaft dient einem Einschrauben einer Schraube in den Dämmstoffanker zu einer Befestigung der Schraube mit Hilfe des Dämmstoffankers an beziehungsweise in dem Dämmstoff. Mit der Schraube lässt sich ein Anbauteil an dem Dämmstoffanker befestigen. Zum Einschrauben der Schraube ist der Hohlschaft an einem hinteren, der Bohrspitze fernen Ende des Dämmstoffankers offen.

Die Bohrspitze ist kein Punkt, sondern sie verjüngt sich vom Hohlschaft weg zu einem Punkt oder auf eine im Verhältnis zu einem Querschnitt des Hohlschafts sehr kleine Stirnfläche am vorderen Ende des Dämmstoffankers, die nicht größer als ein Zehntel des Querschnitts des Hohlschafts ist. Insbesondere ist die Bohrspitze kegelförmig oder pyramidenförmig.

Die Bohrspitze weist eine Umfangsschneide an ihrem Umfang auf, die sich in einer Längsrichtung des Dämmstoffankers erstreckt. Die Umfangsschneide kann sich in einer Axialebene des Dämmstoffankers oder in einer zu einer Axialebene des Dämmstoffankers parallelen Ebene befinden. Die Umfangsschneide kann auch in einem konstanten oder sich ändernden Winkel zu der Axialebene des Dämmstoffankers verlaufen. Die Umfangsschneide dient zu einem Zerspanen oder jedenfalls Abtrennen von Dämmstoff und gegebenenfalls einer auf den Dämmstoff aufgetragenen Putzschicht beim Einschrauben des Dämmstoffankers in den Dämmstoff.

Außerdem weist die Bohrspitze ein Nebengewinde mit einem Durchmesser auf, der kleiner als ein größter Gewindedurchmesser des Dämmstoffgewindes am Hohlschaft ist. Ein größter Nebengewindedurchmesser des Nebengewindes ist kleiner als ein Durchmesser, Nenndurchmesser oder größter Durchmesser des Dämmstoffgewindes. Das Nebengewinde ist zum Einziehen des Dämmstoffankers vorgesehen, das beim Einschrauben des Dämmstoffankers in einen Dämmstoff früh und vor dem Dämmstoffgewinde "greift". Mit "Greifen" ist gemeint, dass sich das Nebengewinde durch Drehen um seine Achse vorzugsweise mit gleichzeitigem axialem Vorschub in den Dämmstoff schneidet und eine axiale Einziehkraft erzeugt, die mit zunehmendem axialem Eindringen in den Dämmstoff steigt. Das Nebengewinde verbessert beziehungsweise erleichtert das Einschrauben des erfindungsgemäßen Dämmstoffankers insbesondere in einen Dämmstoff mit einer Putzschicht oder in einen harten Dämmstoff oder anderen Baustoff mit erhöhtem Widerstand gegen das Eindringen des Dämmstoffankers.

In der Längsrichtung des Dämmstoffankers erstreckt sich das bis in einen Längsbereich der Bohrspitze und bis in einen Längsbereich der Umfangsschneide hinein. Insbesondere verkleinert sich der Gewindeaußendurchmesser des Dämmstoffgewindes nach vorn, zumindest in einem Abschnitt, insbesondere im Bereich der Bohrspitze. Der Längsbereich der Bohrspitze ist ihre Erstreckung in der Längsrichtung des Dämmstoffankers von einem hinteren, dem Hohlschaft zugewandten Ende der Bohrspitze bis zu dem vorderen, dem Hohlschaft fernen Ende der Bohrspitze. Entsprechend ist der Längsbereich der Umfangsschneide deren Erstreckung in der Längsrichtung des Dämmstoffankers von einem hinteren bis zu einem vorderen Ende der Umfangsschneide, wobei die Umfangsschneide - wie oben ausgeführt - auch in einem Winkel zur Längsrichtung, das heißt zu einer Axialebene des Dämmstoffankers, verlaufen kann.

Dadurch, dass sich das Dämmstoffgewinde am Dämmstoffanker weit nach vorn bis in den Längsbereich der Bohrspitze erstreckt, weist es einen guten axialen Halt in einem Dämmstoff in großer Tiefe, das heißt in einem großen Abstand zu einer Oberfläche des Dämmstoffs auf.

Der erfindungsgemäße Dämmstoffanker lässt sich grundsätzlich in beliebige Dämmstoffe wie Schaumstoffplatten, Fasermatten und in andere Baustoffe wie Gipskartonplatten schrauben. Der Dämmstoff muss keine Putzschicht oder andere Oberflächenschicht aufweisen.

Die abhängigen Ansprüche haben vorteilhafte Ausgestaltungen und Weiterbildungen der im Anspruch 1 angegebenen Erfindung zum Gegenstand.

In bevorzugter Ausgestaltung der Erfindung beginnt das Nebengewinde näher am vorderen Ende des Dämmstoffankers als das Dämmstoffgewinde, derart, dass beim Einschrauben des Dämmstoffankers das Nebengewinde vor dem Dämmstoffgewinde greift. Aufgrund seines kleineren Nebengewindedurchmessers weist das Nebengewinde einen kleineren Einschraubwiderstand auf als das Dämmstoffgewinde und unterstützt ein später als das Einschrauben des Nebengewindes beginnendes Einschrauben des Dämmstoffgewindes, indem das Nebengewinde beim Einschrauben die axiale Einziehkraft erzeugt.

In einer Schneidrichtung an oder vor der Umfangsschneide weist das Nebengewinde vorzugsweise eine Unterbrechung auf. Mit "in Schneidrichtung" ist eine Umfangsrichtung gemeint, in die sich die Schneide beim Einschrauben des Dämmstoffankers bewegt. Diese Ausführung der Erfindung ermöglicht zum einen eine Umfangsschneide an der Bohrspitze, die nicht am Gewinde des Nebengewindes unterbrochen ist. Zum anderen kann durch die Unterbrechung des Nebengewindes ein Schneidzahn am Nebengewinde ausgebildet sein, der das Einschneiden des Nebengewindes in den Dämmstoff und - sofern vorhanden - in die Putzschicht erleichtert.

Vorzugsweise beginnt das Nebengewinde nicht am vorderen Ende der Bohrspitze, sondern erst in einem Abstand in der Längsrichtung des Dämmstoffankers dahinter. Eine Zentrierwirkung der Bohrspitze ist dadurch verbessert und ein Eindringen der Bohrspitze in den Dämmstoff oder - sofern vorhanden - in die Putzschicht erleichtert.

Vorzugsweise weist der Dämmstoffanker mehrere Umfangsschneiden auf, die - vorzugsweise gleichmäßig - über einen Umfang der Bohrspitze verteilt angeordnet sind. Insbesondere weist die Bohrspitze zwei einander gegenüber angeordnete Schneiden auf.

Eine Ausgestaltung der Erfindung sieht vor, dass das Dämmstoffgewinde eine oder mehrere Umfangsschneiden überquert und an einer oder mehreren anderen Umfangsschneiden unterbrochen ist. Dabei kann die Unterbrechung in Schneidrichtung kurz vor, auf oder kurz hinter der Umfangsschneide liegen. Eine bevorzugte Ausgestaltung der Erfindung weist zwei Umfangsschneiden auf und das Dämmstoffgewinde überquert eine der beiden Umfangsschneiden und ist an der anderen Umfangsschneide unterbrochen.

In der Schneidrichtung vor der Umfangsschneide weist die Bohrspitze bei einer Ausführung des erfindungsgemäßen Dämmstoffankers ein Bohrmehlnut, das heißt eine sich in der Längsrichtung des Dämmstoffankers erstreckende radiale Vertiefung auf. Die Bohrmehlnut nimmt beim Einschrauben in den Dämmstoff zerspanten Dämmstoff beziehungsweise abgetrennte Dämmstoffteile auf und geht insbesondere mit einer Kante in den Umfang der Bohrspitze über, wobei diese Kante die Umfangsschneide bildet.

Das Dämmstoffgewinde überbrückt die Bohrmehlnut oder überbrückt eine oder mehrere Bohrmehlnuten und ist an einer oder mehreren anderen Bohrmehlnuten unterbrochen.

Das Nebengewinde ist wegen seines kleineren Durchmessers vorzugsweise mehrgängig. Es weist insbesondere eine gleiche Steigung wie das Dämmstoffgewinde auf, wobei mit "Steigung" ein axialer Abstand zweier benachbarter Windungen eines Gewindegangs des Gewindes gemeint ist. Beispielsweise weist das Nebengewinde zwei Gewindegänge zwischen Windungen des Gewindes des Dämmstoffgewindes auf.

Eine Ausgestaltung der Erfindung sieht eine Unterbrechung des Nebengewindes vor, die einen Schneidzahn zum Einschneiden in den Dämmstoff bildet. Die Unterbrechung und der Schneidzahn können an der Umfangsschneide - was oben erläutert worden ist - oder an einer anderen Umfangsstelle der Bohrspitze angeordnet sein.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: eine Seitenansicht eines Dämmstoffankers gemäß der Erfindung;
- Figur 2: einen Achsschnitt des Dämmstoffankers aus Figur 1;
- Figur 3: eine Bohrspitze des Dämmstoffankers aus Figur 1 in einer perspektivischen Darstellung;
- Figur 4: die Bohrspitze mit entgegengesetzter Blickrichtung wie in Figur 3; und
- Figur 5: eine Vorderseite eines Flansches an einem hinteren Ende des Dämmstoffankers aus Figur 1 in einer perspektivischen Darstellung.

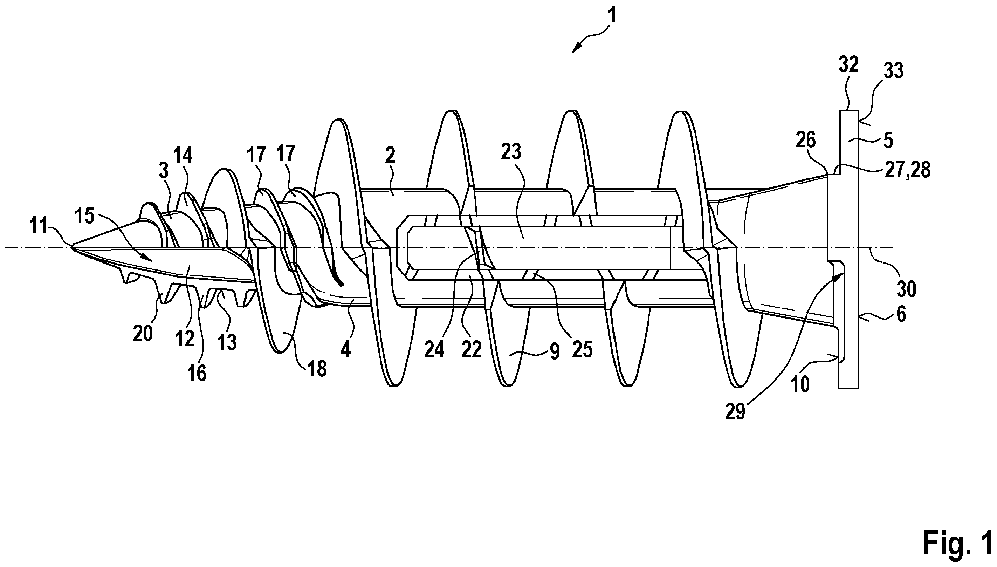

Der in der in den Figuren 1 bis 5 dargestellte erfindungsgemäße Dämmstoffanker 1 ist einstückig als Spritzgussteil aus Kunststoff hergestellt und ist zu einer Befestigung eines nicht dargestellten Anbauteils wie beispielsweise eines Briefkastens oder einer Außenleuchte an einem Dämmstoff vorgesehen, insbesondere an einer geschäumten Dämmstoffplatte eines Wärmedämmverbundsystems, die eine Putzschicht auf ihrer Oberfläche aufweist. Der Dämmstoffanker 1 weist einen zylindrischen Hohlschaft 2 mit einer Bohrspitze 3 an einem vorderen Ende 4 des Hohlschafts 2 und einen scheibenförmigen Flansch 5 in einer Radialebene des Hohlschafts 2 an einem hinteren Ende 6 des Hohlschafts 2 auf.

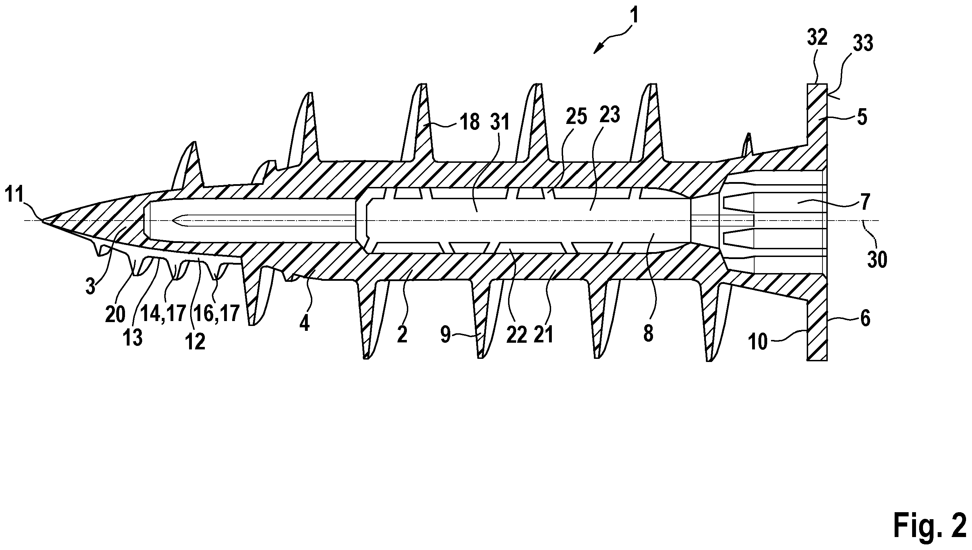

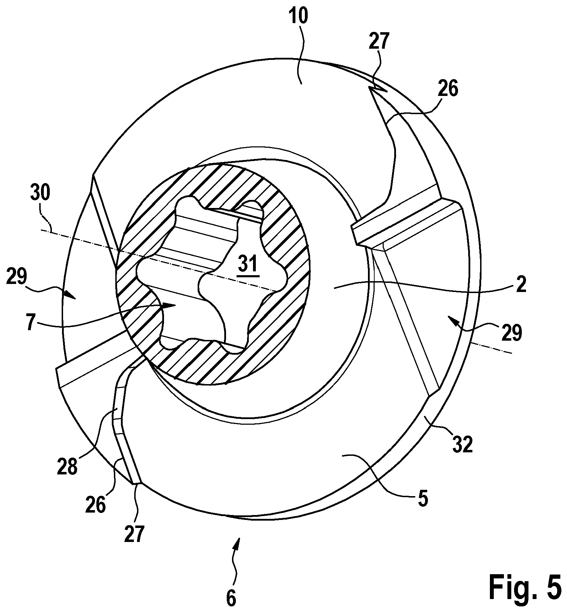

Im hinteren Ende 6 weist der Hohlschaft 2 beziehungsweise der Dämmstoffanker 1 einen Innenstern als Werkzeugsitz 7 (Figuren 2 und 5) zu einem durch Formschluss drehfesten Ansetzen eines nicht dargestellten Drehantriebswerkzeugs auf. Es sind andere Werkzeugsitze 7 wie beispielsweise ein Innensechskant möglich.

Der Hohlschaft 2 weist ein Sackloch 8 zum Einschrauben einer nicht dargestellten Schraube auf, das am hinteren Ende 6 des Hohlschafts 2 beziehungsweise des Dämmstoffankers 1 offen ist und den Werkzeugsitz 7 durchsetzt. Das Sackloch 8 erstreckt sich durch den Hohlschaft 2 hindurch bis in die Bohrspitze 3. Vorn ist das Sackloch 8 geschlossen und endet im Ausführungsbeispiel ungefähr in einer Längsmitte der Bohrspitze 3 (Figur 2). Das Sackloch 8 kann auch länger oder insbesondere kürzer sein und beispielsweise bereits ungefähr in einer Längsmitte des Hohlschafts 2 enden. Das Sackloch 8 kann ein Innengewinde aufweisen. Im Ausführungsbeispiel ist es gewindelos. Das am hinteren Ende 6 des Hohlschafts 2 offene Sackloch 8 kann auch als Schraubkanal 31 zum Einschrauben der nicht dargestellten Schraube in den Dämmstoffanker 1 aufgefasst werden.

Außen weist der Hohlschaft 2 ein Dämmstoffgewinde 9 auf, das den Hohlschaft 2 und einen Teil der Bohrspitze 3 wendelförmig umschließt. Das Dämmstoffgewinde 9 beginnt hinten in einem kurzen axialen Abstand von dem Flansch 5 und erstreckt sich über eine Länge des Hohlschafts 2 und nach vorn bis in einen Längsbereich der Bohrspitze 3. Der Längsbereich der Bohrspitze 3 ist deren axiale Erstreckung beziehungsweise Erstreckung in einer Längsrichtung des Dämmstoffankers 1 vom vorderen Ende 4 des Hohlschafts 2 bis zu einem vorderen, dem Hohlschaft 2 fernen Ende 11 der Bohrspitze 3, das zugleich das vordere Ende 11 des Dämmstoffankers 1 ist.

Im Bereich der Bohrspitze 3 verkleinert sich ein Gewindedurchmesser des Dämmstoffgewindes 9 in Richtung des vorderen Endes 11 der Bohrspitze 3, wobei die Verkleinerung des Gewindedurchmessers des Dämmstoffgewindes 9 bereits im Bereich des Hohlschafts 2 beginnen kann. Mit "Gewindedurchmesser" ist ein Außendurchmesser des Dämmstoffgewindes 9 gemeint. Das Dämmstoffgewinde 9 kann hinten auch an einer dem Hohlschaft 2 zugewandten Vorderseite 10 des Flansches 5 beginnen (nicht dargestellt).

Das Dämmstoffgewinde 9 ist ein in axialer Projektion großflächiges Gewinde um einen guten Halt in dem Dämmstoff oder allgemein einem Baustoff mit niedriger Festigkeit zu haben. "Großflächig" bedeutet, dass das Dämmstoffgewinde 9 eine in radialer Richtung vom Hohlschaft 2 als Kern des Dämmstoffgewindes 9 bis zu einem Außenrand beziehungsweise Umfangsrand des Dämmstoffgewindes 9 hohen Gewindeflansch aufweist im Verhältnis zum Gewindedurchmesser des Dämmstoffgewindes 9 oder zum Durchmesser des Kerns des Dämmstoffgewindes 9, der der Durchmesser des Hohlschafts 2 ist.

Das Dämmstoffgewinde 9 weist einen Gewindedurchmesser zwischen 20 mm und 50 mm und vorzugsweise von etwa 30 mm auf. Ein Verhältnis des Gewindedurchmessers des Dämmstoffgewindes 9 zum Durchmesser seines Kerns beträgt mindestens 1,5 und/oder sein Flankenwinkel ist spitz. Im Ausführungsbeispiel weist das Dämmstoffgewinde 9 einen Flankenwinkel von nicht mehr als 30° auf.

Mit "Bohrspitze 3" ist kein Punkt an dem vorderen Ende 11 des Dämmstoffankers 1 gemeint, sondern ein sich an das vordere Ende 4 des Hohlschafts 2 nach vorn anschließender Axialabschnitt oder Längsabschnitt des Dämmstoffankers 1. Im Ausführungsbeispiel ist die Bohrspitze 3 kegelförmig und verjüngt sich vom Hohlschaft 2 zu einem Punkt am vorderen Ende 11 des Dämmstoffankers 1.

Die Bohrspitze 3 weist zwei einander gegenüber angeordnete Nuten auf, die hier als Bohrmehlnuten 12 bezeichnet werden. Radial beziehungsweise senkrecht auf einen Umfang der Bohrspitze 3 gesehen verjüngen sich die Bohrmehlnuten 12 näherungsweise dreiecksförmig. Die Bohrmehlnuten 12 gehen mit Kanten in eine Umfangsfläche der Bohrspitze 3 über, wobei in einer Drehrichtung beim Einschrauben des Dämmstoffankers 1 hintere Kanten Umfangsschneiden 13 bilden. Somit weist der Dämmstoffanker 1 zwei sich in der Längsrichtung der Bohrspitze 3 erstreckende Umfangsschneiden 13 an seiner Bohrspitze 3 an einander gegenüberliegenden Umfangsstellen der Bohrspitze 3 auf. Im Ausführungsbeispiel befinden sich die beiden Umfangsschneiden 13 bezüglich einer Längsachse 30 des Dämmstoffankers 1 beziehungsweise der Bohrspitze 3 einander gegenüber in einer Axialebene des Dämmstoffankers 1 und der Bohrspitze 3. Möglich sind auch ungerade, sondern in einem Winkel zur Axialebene verlaufende Umfangsschneiden 13, wobei sich der Winkel der Umfangsschneiden 13 zur Axialebene über eine Länge der Umfangsschneiden 13 ändern kann (nicht dargestellt).

Außerdem weist die Bohrspitze 3 ein Nebengewinde 14 auf, dessen größter Nebengewindedurchmesser kleiner als ein größter Gewindedurchmesser des Dämmstoffgewindes 9 ist. Im Ausführungsbeispiel ist der größte Nebengewindedurchmesser nicht größer als halb so groß wie der größte Gewindedurchmesser des Dämmstoffgewindes 9. Das Nebengewinde 14 beginnt nahe am vorderen Ende 11 der Bohrspitze 3, das heißt das Nebengewinde 14 beginnt vor dem Dämmstoffgewinde 9 beziehungsweise näher am vorderen Enden 11 der Bohrspitze 3 als das Dämmstoffgewinde 9. Das Dämmstoffgewinde 9 beginnt etwa an der Längsmitte der Bohrspitze 3. Ein axialer Abschnitt der Bohrspitze 3 vom vorderen Ende 11 bis zum Anfang des Nebengewindes 14 ist gewindelos.

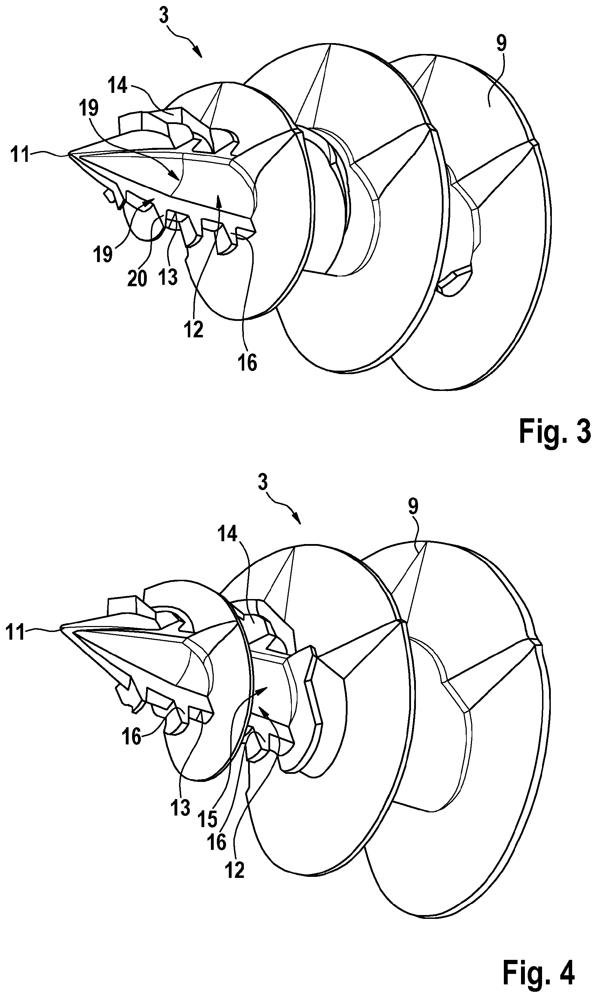

Wie in Figuren 3 und 4 zu sehen ist, ist das Nebengewinde 14 im Bereich der Bohrmehlnuten 12 unterbrochen, wobei in der Einschraubrichtung weisende Endflächen von Gewindegängen 17 des Nebengewindes 14 an Unterbrechungen 15 des Nebengewindes 14 Schneidzähne 16 bilden.

Das Nebengewinde 14 ist mehrgängig, im Ausführungsbeispiel weist es zwei Gewindegänge 17 zwischen zwei axial benachbarten Windungen eines Gewindegangs 18 des Dämmstoffgewindes 9 auf. Das Nebengewinde 14 weist eine gleiche Steigung auf wie das Dämmstoffgewinde 9, wobei die Steigung ein axialer Abstand von zwei axial benachbarten Windungen eines Gewindegangs 17, 18 des Nebengewindes 14 beziehungsweise des Dämmstoffgewindes 9 ist.

Wie in Figur 4 zu sehen ist, überquert das Dämmstoffgewinde 9 eine der beiden Umfangsschneiden 13 und die in der Schneidrichtung vor dieser Umfangsschneide 13 angeordnete Bohrmehlnut 12, wogegen das Dämmstoffgewinde 9 an der anderen Umfangsschneide 13 unterbrochen ist, das heißt eine Unterbrechung 19 im Bereich der in der Einschraubrichtung vor dieser Umfangsschneide 13 angeordneten Bohrmehlnut 12 aufweist (Figur 3). Durch die Unterbrechung 19 weist auch das Dämmstoffgewinde 9 eine in der Schneidrichtung weisende Endfläche auf, die einen Schneidzahn 20 bildet, der ein Einschneiden des Dämmstoffgewindes 9 in den Dämmstoff und gegebenenfalls die Putzschicht erleichtert.

Beim Einschrauben des erfindungsgemäßen Dämmstoffankers 1 erleichtert der gewindelose Abschnitt am vorderen Ende 11 der Bohrspitze 3 ein Eindringen der Bohrspitze 3 bis zum Anfang des Nebengewindes 14 in den Dämmstoff, insbesondere wenn der Dämmstoff eine harte Putzschicht an seiner Oberfläche aufweist.

Bei einem Drehantrieb des Dämmstoffankers 1 mit axialer Beaufschlagung in Richtung des vorderen Endes 11 schneidet sich das Nebengewinde 14 in den Dämmstoff ein und erzeugt eine Axialkraft, die den Dämmstoffanker 1 in den Dämmstoff zieht. Die Schneidzähne 16 des Nebengewindes 14 erleichtern das Einschneiden des Nebengewindes 14 in den Dämmstoff, insbesondere dann, wenn der Dämmstoff die harte Putzschicht an seiner Oberfläche aufweist.

Das Einziehen des Dämmstoffankers 1 in den Dämmstoff bei dem Drehantrieb des Dämmstoffankers 1 mit dem Nebengewinde 14 erleichtert das Einschneiden und Einschrauben des Dämmstoffgewindes 9 in den Dämmstoff insbesondere, wenn der Dämmstoff die harte Putzschicht an seiner Oberfläche aufweist, weil die Putzschicht dem Einschneiden des Dämmstoffgewindes 9 einen höheren Widerstand entgegensetzt als der Dämmstoff ohne die harte Putzschicht.

Beim Einschrauben des Dämmstoffankers 1 in den Dämmstoff trennen die beiden Umfangsschneiden 13 am Umfang der Bohrspitze 3 Partikel vom Dämmstoff und - sofern vorhanden - von der Putzschicht an der Oberfläche des Dämmstoffs ab und bohren beziehungsweise fräsen ein Kernloch für den Hohlschaft 2 des Dämmstoffankers 1 in den Dämmstoff und - sofern vorhanden - durch die Putzschicht an dessen Oberfläche.

In einer Schaftumfangswand 21 seines Hohlschafts 2 weist der erfindungsgemäße Dämmstoffanker 1 ein längliches, achsparalleles Fenster 22 auf, in dem ein stabförmiges Spreizelement 23 angeordnet ist, das sich achsparallel erstreckt und dessen dem hinteren Ende 6 des Hohlschafts 2 zugewandtes hinteres Ende einstückig in die Schaftumfangswand 21 übergeht. Das Spreizelement 23 ist elastisch, es federt in radialer Richtung des Dämmstoffankers 1 beziehungsweise des Hohlschafts 2. Im Ausführungsbeispiel ist das Spreizelement 23 fast so lang wie der Hohlschaft 2 und jedenfalls länger als halb so lang wie der Hohlschaft 2.

Beim Einschrauben einer nicht dargestellten Schraube in den Schraubkanal 31 im Hohlschaft 2 drückt die Schraube das Spreizelement 23 radial auseinander und in den Dämmstoff, was den Halt des Dämmstoffankers 1 im Dämmstoff verbessert.

Im Bereich des Fensters 22 ist das Dämmstoffgewinde 9 unterbrochen. Nahe einem vorderen Ende weist das Spreizelement 23 einen Ankerzahn 24 auf, der radial nach außen von dem Spreizelement 23 absteht und das Dämmstoffgewinde 9 im Bereich des Fensters 22 fortsetzt. Wird das Spreizelement 23 im Dämmstoff radial nach außen gedrückt, dringt der Ankerzahn 24 in den Dämmstoff ein und verbessert den Halt des Dämmstoffankers 1 im Dämmstoff.

Um eine Torsionssteifigkeit des Hohlschafts 2 zu erhöhen, der durch das Fenster 22 geschwächt ist, weist der erfindungsgemäße Dämmstoffanker 1 mehrere Verbinder 25 auf, die einstückig mit der Schaftumfangswand 21 des Hohlschafts 2 und dem Spreizelement 23 sind und die das Spreizelement 23 mit der Schaftumfangswand 21 verbinden. Die Verbinder 25 sind in axialer Richtung des Dämmstoffankers 1 verteilt über eine Länge des Spreizelements 23 in der Umfangsrichtung des Hohlschafts 2 beiderseits des Spreizelements 23 an Längsseiten des Spreizelements 23 in einem Spalt zwischen dem Spreizelement 23 und der Schaftumfangswand 21 des Hohlschafts 2 in dem Fenster 22 der Schaftumfangswand 21 angeordnet. Im Ausführungsbeispiel sind die Verbinder 25 in entgegengesetzten Richtungen schräg zu Radialebenen des Hohlschafts 2 angeordnet, die Verbinder 25 weisen sozusagen Steigungen in entgegengesetzten Richtungen auf. Die Verbinder 25 können auch in gleicher Richtung steigen oder in der Umfangsrichtung, das heißt in den Radialebenen des Hohlschafts 2 angeordnet sein (nicht dargestellt). Es sind Ausführungen des erfindungsgemäßen Dämmstoffankers 1 mit geschlossener Schaftumfangswand 21 ohne Fenster 22 und/oder ohne Spreizelement 23 möglich (nicht dargestellt).

Wird das Spreizelement 23 radial nach außen gedrückt, dehnen und biegen sich die Verbinder 25 elastisch und/oder plastisch und sie können nach Art von Sollbruchstellen reißen.

An seiner dem Hohlschaft 2 zugewandten Vorderseite 10 weist der Flansch 5 Stirnschneiden 26 auf (Figur 5), die sich vom Hohlschaft 2 bis zu einem Außenrand 32 beziehungsweise Umfangsrand des Flansches 5 erstrecken. Im Ausführungsbeispiel weist der Dämmstoffanker 1 zwei Stirnschneiden 26 einander bezüglich der Längsachse 30 des Dämmstoffankers 1 gegenüber an der Vorderseite 10 des Flansches 5 auf. Die Stirnschneiden 26 können sich in einer Axialebene oder in einem Winkel schräg zu einer Axialebene des Dämmstoffankers 2 erstrecken. Im Ausführungsbeispiel sind die Stirnschneiden 26 sichel- beziehungsweise bogen förmig konkav gewölbt beziehungsweise ein- oder mehrfach abgewinkelt.

An den radial äußeren Enden der Stirnschneiden 26 an seinem Außenrand 32 weist der Flansch 5 axial niedrige, sich in achsparalleler Richtung des Dämmstoffankers 1 erstreckende Nebenschneiden 27 auf.

Die Stirnschneiden 26 und die Nebenschneiden 27 an der Vorderseite 10 des Flansches 5 am hinteren Ende 6 des Hohlschafts 2 beziehungsweise des Dämmstoffankers 1 trennen beim Einschrauben des Dämmstoffankers 1 in den Dämmstoff Material ab und erleichtern dadurch ein bündig mit einer Oberfläche versenktes Einbringen des Flansches 5 in die harte Putzschicht auf der Oberfläche des Dämmstoffs, wenn eine solche Putzschicht vorhanden ist. Beim Einschrauben in den Dämmstoff fräsen die Stirnschneiden 26 und die Nebenschneiden 27 eine Senkung für den Flansch 5 in die Putzschicht. Die Stirnschneiden 26, sind an Stufen 28 ausgebildet. In Drehrichtung hinter den Stufen ist jeweils ein axial zurückgesetzter Freiraum 29 zur Aufnahme von Staub und Bruchstücken, die beim Fräsen anfallen, angeordnet.

### Bezugszeichenliste

- 1: Dämmstoffanker
- 2: Hohlschaft
- 3: Bohrspitze
- 4: vorderes Ende des Hohlschafts 2
- 5: Flansch
- 6: hinteres Ende des Hohlschafts 2
- 7: Werkzeugsitz
- 8: Sackloch
- 9: Dämmstoffgewinde
- 10: Vorderseite des Flansches 5
- 11: vorderes Ende des Dämmstoffankers 1 und der Bohrspitze 3
- 12: Bohrmehlnut
- 13: Umfangsschneide
- 14: Nebengewinde
- 15: Unterbrechung des Nebengewindes 14
- 16: Schneidzahn des Nebengewindes 14
- 17: Gewindegang des Nebengewindes 14
- 18: Gewindegang des Dämmstoffgewindes 9
- 19: Unterbrechung des Dämmstoffgewindes 9
- 20: Schneidzahn des Dämmstoffgewindes 9
- 21: Schaftumfangswand
- 22: Fenster
- 23: Spreizelement
- 24: Ankerzahn
- 25: Verbinder
- 26: Stirnschneide
- 27: Nebenschneide
- 28: Stufe
- 29: Freiraum
- 30: Längsachse
- 31: Schraubkanal
- 32: Außenrand des Flansches 5
- 33: Rückseite des Flansches 5

## Patentansprüche

1. Dämmstoffanker (1) zum Einschrauben in einen Dämmstoff zum Befestigen eines Anbauteils, mit einem Hohlschaft (2) zum Einschrauben einer Schraube, der außen ein Dämmstoffgewinde (9) aufweist, und mit einer Bohrspitze (3) an einem vorderen Ende (4) des Hohlschafts (2), **dadurch gekennzeichnet, dass** der Dämmstoffanker (1) eine sich in einer Längsrichtung des Dämmstoffankers (1) erstreckende Umfangsschneide (13) an einem Umfang der Bohrspitze (3) aufweist, dass die Bohrspitze (3) ein Nebengewinde (14) mit einem Nebengewindedurchmesser aufweist, der kleiner als ein größter Gewindedurchmesser des Dämmstoffgewindes (9) am Holhlschaft (2) ist, und dass sich das Dämmstoffgewinde (9) in Längsrichtung des Dämmstoffankers (1) bis in einen Längsbereich der Bohrspitze (3) und in einen Längsbereich der Umfangsschneide (13) hinein erstreckt.

2. Dämmstoffanker (1) nach Anspruch 1, **dadurch gekennzeichnet, dass** das Nebengewinde (14) näher am vorderen Ende (11) des Dämmstoffankers (1) beginnt als das Dämmstoffgewinde (9).

3. Dämmstoffanker (1) nach Anspruch 1 oder 2, **dadurch gekennzeichnet, dass** das Nebengewinde (14) an der Umfangsschneide (13) eine Unterbrechung (15) aufweist.

4. Dämmstoffanke (1)r nach einem oder mehreren der Ansprüche 1 bis 3, **dadurch gekennzeichnet, dass** ein Abschnitt an einem vorderen, dem Hohlschaft (2) fernen, vorderen Ende (11) der Bohrspitze (3) gewindelos ist.

5. Dämmstoffanker (1) nach einem oder mehreren der vorhergehenden Ansprüche, **dadurch gekennzeichnet, dass** die Bohrspitze (3) mindestens zwei sich in der Längsrichtung des Dämmstoffankers (1) erstreckende Umfangsschneiden (13) und insbesondere genau zwei bezüglich einer Längsachse (30) des Dämmstoffankers (1) einander gegenüber angeordnete Umfangsschneiden (13) aufweist.

6. Dämmstoffanker (1) nach Anspruch 5, **dadurch gekennzeichnet, dass** das Dämmstoffgewinde (9) nicht alle der Umfangsschneiden (13) überquert und insbesondere genau eine Umfangsschneide (13) überquert oder genau eine Umfangsschneide (13) nicht überquert.

7. Dämmstoffanker (1) nach einem oder mehreren der vorhergehenden Ansprüche, **dadurch gekennzeichnet, dass** die Bohrspitze (3) in der Schneidrichtung vor der Umfangsschneide (13) eine Bohrmehlnut (12) aufweist.

8. Dämmstoffanker (1) nach Anspruch 7, **dadurch gekennzeichnet, dass** das Dämmstoffgewinde (9) die Bohrmehlnut (12) überbrückt.

9. Dämmstoffanker (1) nach einem oder mehreren der vorhergehenden Ansprüche, **dadurch gekennzeichnet, dass** das Nebengewinde (14) mehrgängig ist.

10. Dämmstoffanker (1) nach einem oder mehreren der vorhergehenden Ansprüche, **dadurch gekennzeichnet, dass** ein Gewindegang (17) des Nebengewindes (14) eine Unterbrechung (15) aufweist, durch die ein Schneidzahn (16) zum Einschneiden des Nebengewindes (14) in den Dämmstoff gebildet ist.

## Claims

1. Insulation anchor (1) for screwing into insulation material for fastening an attachment part, with a hollow shaft (2) for screwing in a screw, which has an insulation thread (9) on the outside, and with a drill tip (3) at a front end (4) of the hollow shaft (2), **characterized in that** the insulation anchor (1) has a circumferential cutting edge (13) extending in a longitudinal direction of the insulation anchor (1) on a circumference of the drill tip (3), **in that** the drill tip (3) has a secondary thread (14) with a secondary thread diameter which is smaller than a largest thread diameter of the insulation thread (9) on the hollow shaft (2), and **in that** the insulation thread (9) extends in the longitudinal direction of the insulation anchor (1) into a longitudinal region of the drill tip (3) and into a longitudinal region of the circumferential cutting edge (13).

2. . Insulation anchor (1) according to claim 1, **characterized in that** the secondary thread (14) begins closer to the front end (11) of the insulation anchor (1) than the insulation thread (9).

3. . Insulation anchor (1) according to claim 1 or 2, **characterized in that** the secondary thread (14) has a recess (15) on the circumferential cutting edge (13).

4. . Insulation anchor (1) according to one or more of claims 1 to 3, **characterized in that** a section at a front end (11) of the drill tip (3) remote from the hollow shaft (2) is threadless.

5. . Insulation anchor (1) according to one or more of the preceding claims, **characterized in that** the drill tip (3) has at least two circumferential cutting edges (13) extending in the longitudinal direction of the insulation anchor (1) and, in particular, exactly two circumferential cutting edges (13) arranged opposite each other with respect to a longitudinal axis (30) of the insulation anchor (1).

6. . Insulation anchor (1) according to claim 5, **characterized in that** the insulation thread (9) does not cross all of the circumferential cutting edges (13) and, in particular, crosses exactly one circumferential cutting edge (13) or does not cross exactly one circumferential cutting edge (13).

7. . Insulation anchor (1) according to one or more of the preceding claims, **characterized in that** the drill tip (3) has a drilling dust groove (12) in front of the circumferential cutting edge (13) in the cutting direction.

8. Insulation anchor (1) according to claim 7, **characterized in that** the insulation thread (9) bridges the drilling dust groove (12).

9. Insulation anchor (1) according to one or more of the preceding claims, **characterized in that** the secondary thread (14) is multi-start.

10. Insulation anchor (1) according to one or more of the preceding claims, **characterized in that** a thread pitch (17) of the secondary thread (14) has a recess (15) through which a cutting tooth (16) is formed for cutting the secondary thread (14) into the insulation material.

## Revendications

1. Ancrage pour matériau isolant (1) destiné à être vissé dans un matériau isolant pour fixer une pièce rapportée, comprenant une tige creuse (2) destinée à recevoir une vis, qui présente à l'extérieur un filetage (9) pour matériau isolant, et une pointe de perçage (3) à une extrémité avant (4) de la tige creuse (2), **caractérisée en ce que** l'ancrage pour matériau isolant (1) présente un tranchant périphérique (13) s'étendant dans une direction longitudinale de l'ancrage pour matériau isolant (1) sur un pourtour de la pointe de perçage (3), **en ce que** la pointe de perçage (3) présente un filetage secondaire (14) avec un diamètre de filetage secondaire qui est inférieur à un plus grand diamètre de filetage du filetage pour matériau isolant (9) sur la tige creuse (2), et **en ce que** le filetage pour matériau isolant (9) s'étend dans la direction longitudinale de l'ancrage pour matériau isolant (1) jusqu'à une zone longitudinale de la pointe de perçage (3) et dans une zone longitudinale du tranchant périphérique (13).

2. Ancrage pour matériau isolant (1) selon la revendication 1, **caractérisé en ce que** le filetage secondaire (14) commence plus près de l'extrémité avant (11) de l'ancrage pour matériau isolant (1) que le filetage pour matériau isolant (9).

3. Ancrage pour matériau isolant (1) selon la revendication 1 ou 2, **caractérisé en ce que** le filetage secondaire (14) présente une interruption (15) au niveau du tranchant périphérique (13).

4. Ancrage pour matériau isolant (1) selon l'une ou plusieurs des revendications 1 à 3, **caractérisé en ce qu'**une section à une extrémité avant (11) de la pointe de perçage (3), éloignée de la tige creuse (2), est dépourvue de filetage.

5. Ancrage pour matériau isolant (1) selon une ou plusieurs des revendications précédentes, **caractérisé en ce que** la pointe de perçage (3) présente au moins deux tranchants périphériques (13) s'étendant dans la direction longitudinale de l'ancrage pour matériau isolant (1) et en particulier exactement deux tranchants périphériques (13) disposés en vis-à-vis l'un de l'autre par rapport à un axe longitudinal (30) de l'ancrage pour matériau isolant (1) .

6. Ancrage pour matériau isolant (1) selon la revendication 5, **caractérisé en ce que** le filetage pour matériau isolant (9) ne traverse pas tous les tranchants périphériques (13) et traverse en particulier exactement un tranchant périphérique (13) ou ne traverse pas exactement un tranchant périphérique (13).

7. Ancrage pour matériau isolant (1) selon une ou plusieurs des revendications précédentes, **caractérisé en ce que** la pointe de perçage (3) présente, dans la direction de coupe, une rainure pour poussière de perçage (12) devant le tranchant périphérique (13).

8. Ancrage pour matériau isolant (1) selon la revendication 7, **caractérisé en ce que** le filetage pour matériau isolant (9) recouvre la rainure pour poussière de perçage (12).

9. Ancrage pour matériau isolant (1) selon l'une ou plusieurs des revendications précédentes, **caractérisé en ce que** le filetage secondaire (14) est à plusieurs filets.

10. Ancrage pour matériau isolant (1) selon l'une ou plusieurs des revendications précédentes, **caractérisé en ce qu'**un pas de filetage (17) du filetage secondaire (14) présente une interruption (15) à travers laquelle est formée une dent de coupe (16) pour entailler le filetage secondaire (14) dans le matériau isolant.
